(19) **Europäisches Patentamt European Patent Office Office européen des brevets**

(11) **EP 4 535 049 A1**

(12) **EUROPEAN PATENT APPLICATION**
published in accordance with Art. 153(4) EPC

(43) Date of publication:
09.04.2025 Bulletin 2025/15

(21) Application number: 22946549.7

(22) Date of filing: 26.10.2022

(51) International Patent Classification (IPC):
$G02B\ 6/02^{(2006.01)}$ $\quad G02B\ 6/028^{(2006.01)}$
$G02B\ 6/036^{(2006.01)}$

(52) Cooperative Patent Classification (CPC):
Y02P 40/57

(86) International application number:
PCT/CN2022/127613

(87) International publication number:
WO 2023/240879 (21.12.2023 Gazette 2023/51)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 15.06.2022 CN 202210681648

(71) Applicants:
• **FIBERHOME TELECOMMUNICATION TECHNOLOGIES CO., LTD.**
**Hubei 430000 (CN)**
• **Fiberhome Fujikura Optic Technology Co., Ltd**
**Wuhan, Hubei 430000 (CN)**

(72) Inventors:
• **LUO, Wenyong**
**Wuhan, Hubei 430000 (CN)**
• **GENG, Hao**
**Wuhan, Hubei 430000 (CN)**

• **YU, Huang**
**Wuhan, Hubei 430000 (CN)**
• **WU, Haibo**
**Wuhan, Hubei 430000 (CN)**
• **CHEN, Baoping**
**Wuhan, Hubei 430000 (CN)**
• **HU, Guyue**
**Wuhan, Hubei 430000 (CN)**
• **LIAO, Weizhang**
**Wuhan, Hubei 430000 (CN)**
• **HUANG, Fei**
**Wuhan, Hubei 430000 (CN)**
• **HUANG, Zhiling**
**Wuhan, Hubei 430000 (CN)**
• **QI, Qingqing**
**Wuhan, Hubei 430000 (CN)**
• **SHAO, Shuai**
**Wuhan, Hubei 430000 (CN)**

(74) Representative: **Lohmanns Lohmanns & Partner mbB**
**Benrather Schlossallee 49-53**
**40597 Düsseldorf (DE)**

(54) **SMALL-DIAMETER SINGLE-MODE OPTICAL FIBER**

(57) A small-diameter single-mode optical fiber, comprising a germanium-doped core layer (1), a first transitional cladding layer (2), a second transitional cladding layer (3) and an outer quartz cladding layer (8), which are sequentially arranged from inside to outside in the radial direction, wherein the refractive index of the first transitional cladding layer (2) is less than that of the germanium-doped core layer (1), and is greater than that of the second transitional cladding layer (3); and the relative refractive index difference of the first transitional cladding layer (2) linearly decreases from inside to outside in the radial direction in a first polynomial form, and the relative refractive index difference of the second transitional cladding layer (3) linearly decreases from inside to outside in the radial direction in a second poly-

nomial form. The first transitional cladding layer (2), the relative refractive index difference of which linearly decreases in the first polynomial form, and the second transitional cladding layer (3), the relative refractive index difference of which linearly decreases in the second polynomial form, are designed around the germanium-doped core layer (1), such that a waveguide structure having two smoothly transitional cladding layers is formed, and the capability of the small-diameter optical fiber resisting external disturbance is enhanced; and smooth transition between the germanium-doped core layer (1) and the outer quartz cladding layer (8) is realized, such that stress between core packages is reduced, and micro cracks in the optical fiber caused by the stress are reduced, thereby improving the long-term

EP 4 535 049 A1

reliability of the optical fiber.

Fig. 1

**Description**

**Field of the Invention**

The present application relates to the technical field of optical fiber manufacturing, and in particular to a small-diameter single-mode optical fiber.

**Background of the Invention**

With the acceleration of the construction of global broadband networks, new generation mobile communications, and the integration of three networks (telecom, television, and internet), the demand for higher network bandwidth in communication services is increasing. Optical fiber communication, known for its fastest speeds and best transmission quality, is widely used as a preferred communication method. In network construction, with the increasing scarcity of conduit resources, users have raised higher demands for space utilization, construction efficiency, and ease of maintenance. The air-blown micro-cable technology is undoubtedly an excellent choice to address these challenges. In addition, the development of information technology has created a demand for ODN (Optical Distribution Network) technology. To meet the requirements of optical fiber and 5G network construction, the ODN technology increasingly demands smaller physical space. This often necessitates the installation of numerous devices within very compact distribution boxes, leaving even less space for the optical fibers that are used for high-speed, high-bandwidth communication connections between devices. Therefore, both large-core-count micro-cable technology and the rapidly developing ODN technology place significant demands on small-diameter single-mode optical fiber technology.
The smaller the diameter of the optical fiber and the thinner the coating layer, the more susceptible the optical fiber becomes to external interference. As a result, traditional methods that rely solely on reducing the size of single-mode optical fiber are not suitable for micro-cables and intelligent ODN technologies, which have higher performance requirements for optical fibers. In addition, the application of small-diameter single-mode optical fiber needs to rely on existing cutting and welding equipment, so the size of the optical fiber needs to meet the requirements of existing cutting, welding and other equipment while meeting the performance improvement. Therefore, how to develop a small-diameter single-mode optical fiber that not only has a smaller volume but also possesses excellent geometric and optical performance, while maintaining good splicing compatibility with conventional communication optical fibers, has become a critical challenge that optical fiber manufacturers must address in order to advance the miniaturization of single-mode optical fiber technology.

**Summary of the Invention**

The embodiment of the present application provides a small-diameter single-mode optical fiber, which achieves a smooth transition between the germanium-doped core layer and the outer quartz cladding layer through two waveguide structures: parabolic descent and polynomial line shape descent, which reduces the stress between the core and cladding, thereby minimizing the microcracks inside the optical fiber caused by stress and improving the long-term reliability thereof.
The embodiment of the present application provides a small-diameter single-mode optical fiber, comprising a germanium-doped core layer, a first transitional cladding layer, a second transitional cladding layer and an outer quartz cladding layer, which are arranged successively from inside to outside along a radial direction, wherein

a refractive index of the first transitional cladding layer is less than that of the germanium-doped core layer, and is greater than that of the second transitional cladding layer; and

from inside to outside along the radial direction, a relative refractive index difference of the first transitional cladding layer is decreased in a first polynomial line shape, and the relative refractive index difference of the second transitional cladding layer is decreased in a second polynomial line shape.

In some embodiments, the refractive index of the first transitional cladding layer is $n_2$, the refractive index of the outer quartz cladding layer is $n_8$, and the relative refractive index difference between $n_2$ and $n_8$ is $\Delta n_2$; and

$$\Delta n_2 = [a_1 * (1 - x_1 - x_1^2) + b_1]/100,$$

wherein
$x_1$ is a distance from any point in the first transitional cladding layer to a center of the germanium-doped core layer, and $a_1$ and $b_1$ are both transition coefficients, with a value range of 0.15%~0.3% for $a_1$ and 0.35~0.45 for $b_1$.

In some embodiments, the refractive index of the second transitional cladding layer is $n_3$, the refractive index of the outer quartz cladding layer is $n_8$, and the relative refractive index difference between $n_3$ and $n_8$ is $\Delta n_3$; and

$$\Delta n_3 = [b_2 * (1 - a_2 * x_2^2)]/100,$$

wherein
$x_2$ is a distance from any point in the second transitional cladding layer to a center of the germanium-doped core layer, and $a_2$ and $b_2$ are both transition coefficients, with a value range of 1.8%~2.2% for $a_2$ and 0.6~0.8 for $b_2$.

In some embodiments, a radius of the germanium-doped core layer is 3.0~5.0 micrometers, a total thickness of the first transitional cladding layer and the second transitional cladding layer is 2.0~4.0 micrometers, and the radius of the outer quartz cladding layer is 30~45 micrometers.

In some embodiments, the small-diameter single-mode optical fiber further comprises a fluorine-doped concave cladding layer and a third transitional cladding layer which are arranged successively from inside to outside along the radial direction, and the fluorine-doped concave cladding layer and the third transitional cladding layer are located between the second transitional cladding layer and the outer quartz cladding layer; and
the refractive index of the third transitional cladding layer is smaller than that of the outer quartz cladding layer, and larger than that of the fluorine-doped concave cladding layer.

In some embodiments, the refractive index of the first transitional cladding layer is $n_2$, the refractive index of the outer quartz cladding layer is $n_8$, and the relative refractive index difference between $n_2$ and $n_8$ is $\Delta n_2$; and

$$\Delta n_2 = [a_3 * (1 - x_1 - x_1^2 - x_1^3) + b_3]/100, \text{ wherein}$$

$x_1$ is a distance from any point in the first transitional cladding layer to a center of the germanium-doped core layer, and $a_3$ and $b_3$ are both transition coefficients, with a value range of 0.26%~0.30% for $a_3$ and 0.54~0.58 for $b_3$.

In some embodiments, the refractive index of the second transitional cladding layer is $n_3$, the refractive index of the outer quartz cladding layer is $n_8$, and the relative refractive index difference between $n_3$ and $n_8$ is $\Delta n_3$; and

$$\Delta n_3 = [b_4 * (1 - a_4 * x_2^2)]/100,$$

wherein
$x_2$ is a distance from any point in the second transitional cladding layer to a center of the germanium-doped core layer, and $a_4$ and $b_4$ are both transition coefficients, with a value range of 2.8%~3.2% for $a_4$ and 0.45~0.55 for $b_4$.

In some embodiments, the refractive index of the fluorine-doped concave cladding layer is $n_6$, the refractive index of the outer quartz cladding layer is $n_8$, and the relative refractive index difference between $n_6$ and $n_8$ is $\Delta n_6$; and
a value range of $\Delta n_6$ is -0.12%~-0.21%.

In some embodiments, a radius of the germanium-doped core layer is 3.0~4.0 micrometers, a total thickness of the first transitional cladding layer and the second transitional cladding layer is 2.0~4.0 micrometers, a thickness of the fluorine-doped concave cladding layer is 9.0~20.0 micrometers and the radius of the outer quartz cladding layer is 30~45 micrometers.

In some embodiments, the small-diameter single-mode optical fiber further comprises an inner quartz cladding layer and a fourth transitional cladding layer which are arranged successively from inside to outside along the radial direction, and the inner quartz cladding layer and the fourth transitional cladding layer are located between the second transitional cladding layer and the fluorine-doped concave cladding layer; and
the refractive index of the fourth transitional cladding layer is smaller than that of the inner quartz cladding layer, and larger than that of the fluorine-doped concave cladding layer.

In some embodiments, the refractive index of the first transitional cladding layer is $n_2$, the refractive index of the outer quartz cladding layer is $n_8$, and the relative refractive index difference between $n_2$ and $n_8$ is $\Delta n_2$; and

$$\Delta n_2 = [a_5 * (1 - x_1 - x_1^2) + b_5]/100, \text{ wherein}$$

$x_1$ is a distance from any point in the first transitional cladding layer to a center of the germanium-doped core layer, and $a_5$ and $b_5$ are both transition coefficients, with a value range of 0.15%~0.30% for $a_5$ and 0.35~0.45 for $b_5$.

In some embodiments, the refractive index of the second transitional cladding layer is $n_3$, the refractive index of the outer quartz cladding layer is $n_8$, and the relative refractive index difference between $n_3$ and $n_8$ is $\Delta n_3$; and

$$\Delta n_3=[b_6*(1-a_6*x_2^2)]/100,$$

wherein

$x_2$ is a distance from any point in the second transitional cladding layer to a center of the germanium-doped core layer, and $a_6$ and $b_6$ are both transition coefficients, with a value range of 1.8%~2.2% for $a_6$ and 0.6~0.8 for $b_6$.

In some embodiments, the refractive index of the fluorine-doped concave cladding layer is $n_6$, the refractive index of the outer quartz cladding layer is $n_8$, and the relative refractive index difference between $n_6$ and $n_8$ is $\Delta n_6$; and a value range of $\Delta n_6$ is -0.22%~-0.46%.

In some embodiments, a radius of the germanium-doped core layer is 2.5~4.0 micrometers, a total thickness of the first transitional cladding layer, the second transitional cladding layer and the inner quartz cladding layer is 3.0~8.0 micrometers, a total thickness of the fourth transitional cladding, the fluorine-doped concave cladding layer and the third transitional cladding layer is 9.0~25.0 micrometers and the radius of the outer quartz cladding layer is 30~62.5 micrometers.

In some embodiments, the outer quartz cladding layer is doped with alkali metal elements or halogens to reduce the viscosity.

In some embodiments, the germanium-doped core layer is doped with alkali metal elements or halogens to reduce the viscosity.

In some embodiments, the alkali metal element is at least one of potassium and lithium, and the halogen is chlorine.

The beneficial effects brought about by the technical solution provided by the present application comprise: The small-diameter single-mode optical fiber in the embodiment of the present application has a double transitional cladding layer designed around the germanium-doped core layer, which are a first transitional cladding layer whose relative refractive index difference is decreased in a first polynomial line shape and a second transitional cladding layer whose relative refractive index difference is decreased in a second polynomial line shape, so as to form a waveguide structure with double smooth transitional cladding layers, and optimize the problem of increased macrobending loss and microbending loss caused by the thinning of the coating layer and the outer quartz cladding layer after the optical fiber becomes thinner, so that the small-diameter single-mode optical fiber still has excellent attenuation performance under the same external interference conditions as the existing conventional optical fiber; and in response to the long-term reliability issues that arise as the optical fiber diameter decreases, the present application achieves a smooth transition between the germanium-doped core layer and the outer quartz cladding layer through two structures of the first polynomial line shape descent and the second polynomial line shape descent, which reduces the stress between the core and cladding, thereby minimizing the microcracks inside the optical fiber caused by stress and improving the long-term reliability thereof.

The present application reduces the serious side light leakage problem of the small-diameter single-mode optical fiber when the small-diameter single-mode optical fiber is fused with the existing conventional single-mode optical fiber through two transitional cladding layers and two structures of the first polynomial line shape descent and the second polynomial line shape descent. Since the small-diameter single-mode optical fiber is 30%~50% thinner than the existing conventional single-mode optical fiber, the temperature at the fusion point has a greater impact on the small-diameter single-mode optical fiber than the conventional single-mode optical fiber. The doping components in the germanium-doped core layer is more prone to diffusion, thereby reducing its ability to constrain optical to propagate at low loss, causing part of the optical to leak due to the reduced NA caused by the diffusion of doping components in the germanium-doped core layer. The structure of the present application adopts a double polynomial descent, so the diffusion effect caused by the heat transfer from the outer quartz cladding layer into the germanium-doped core layer is well weakened, thereby achieving good compatibility with the existing conventional single-mode optical fibers, good compatibility with conventional G.652 optical fibers, and low butt splice losses.

**Brief Description of the Drawings**

In order to better illustrate the technical solution in the embodiments of the present application, the following will briefly introduce the drawings needed in the description of the embodiments, and it is obvious that the drawings in the following description are part of embodiments of the present application, for those of ordinary skill in the art, other drawings may also be obtained based on these drawings without any inventive effort.

Fig. 1 is a waveguide structure diagram of a small-diameter single-mode optical fiber in the embodiment of the present application;

Fig. 2 is a waveguide structure diagram of a small-diameter single-mode optical fiber in another embodiment of the present application;

Fig. 3 is a waveguide structure diagram of a small-diameter single-mode optical fiber in yet another embodiment of the present application.

In the figures: 1-germanium-doped core layer; 2-the first transitional cladding layer; 3-the second transitional cladding layer; 4-inner quartz cladding layer; 5-the fourth transitional cladding layer; 6-fluorine-doped concave cladding layer; 7-the third transitional cladding layer; 8-outer quartz cladding layer.

**Detailed Description of the Embodiments**

In order to make the purpose, technical solutions and advantages of the embodiments of the present application clearer, the technical solutions in the embodiments of the present application will be described clearly and completely in combination with the drawings in the embodiments of the present application. Obviously, the described embodiments are only a part of the embodiments of the present application, not all of the embodiments. Based on the embodiments in the present application, all other embodiments obtained by a person of ordinary skill in the art without inventive efforts shall fall within the protection scope of the present application.

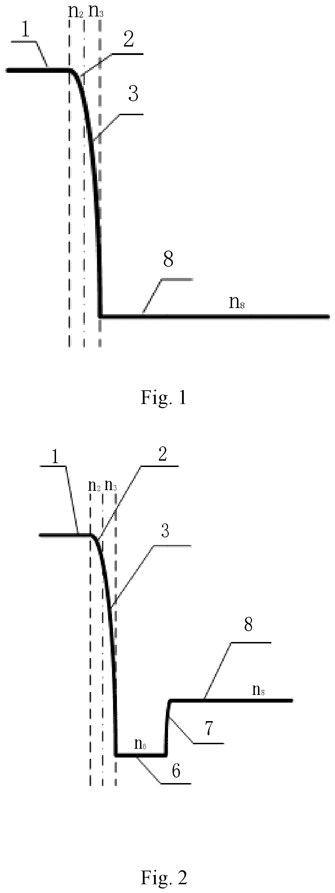

As shown in Fig. 1, a preferred embodiment of the present application provides a small-diameter single-mode optical fiber, which comprises a germanium-doped core layer 1, a first transitional cladding layer 2, a second transitional cladding layer 3 and an outer quartz cladding layer 8, which are arranged successively from inside to outside along a radial direction, wherein a refractive index of the first transitional cladding layer 2 is less than that of the germanium-doped core layer 1, and is greater than that of the second transitional cladding layer 3; and from inside to outside along the radial direction, a relative refractive index difference of the first transitional cladding layer 2 is decreased in the first polynomial line shape, the relative refractive index difference of the second transitional cladding layer 3 is decreased in the second polynomial line shape, the junction between the first polynomial line shape and the second polynomial line shape has a smooth transition, so that the first transitional cladding layer 2 and the second transitional cladding layer 3 are integrated as a whole, allowing for a smooth transition of the waveguide structure with relative refractive index difference.

The relative refractive index difference of the first transitional cladding layer 2 is decreased in the first polynomial line shape, and the relative refractive index difference of the second transitional cladding layer 3 is decreased in the second polynomial line shape, which means that the relative refractive index difference gradually decreases from inside to outside along the radial direction, and the relative refractive index difference satisfies a polynomial function. Obviously, the first polynomial function corresponding to the first polynomial line shape is different from the second polynomial function corresponding to the second polynomial line shape.

The small-diameter single-mode optical fiber in the embodiment of the present application is designed with a double transitional cladding layer around the germanium-doped core layer 1, which are a first transitional cladding layer 2, the relative refractive index difference of which is decreased in the first polynomial line shape and a second transitional cladding layer 3, the relative refractive index difference of which is decreased in the second polynomial line shape, thereby forming a waveguide structure with double smooth transitional cladding layers. The capability of the small-diameter optical fiber to resist external disturbance is enhanced from two aspects of reducing macrobending loss and microbending loss, and realizes a smooth transition between the germanium-doped core layer 1 and the outer quartz cladding layer 8 through the two structures of the first polynomial line shape descent and the second polynomial line shape descent, thereby reducing the stress between the core and cladding, and reducing the microcracks inside the optical fiber caused by stress, thereby improving the long-term reliability.

The present application adopts the following formula to calculate the relative refractive index difference $\Delta n_i$:

$$\Delta n_i = (n_i - n_8)/(n_i + n_8)*100\%,$$

wherein

$n_8$ is the refractive index of the outer quartz cladding layer 8, and for the present application, when the relative refractive index difference $\Delta n_2$ between the first transitional cladding layer 2 and the outer quartz cladding layer 8 is calculated, $n_i$ in the formula is the refractive index $n_2$ of the first transitional cladding layer 2; when the relative refractive index difference $\Delta n_3$ between the second transitional cladding layer 3 and the outer quartz cladding layer 8 is calculated, $n_i$ in the formula is the refractive index $n_3$ of the second transitional cladding layer 3; and the same applies to other layers.

As shown in Fig. 1, in the above embodiment, the refractive index of the first transitional cladding layer 2 is $n_2$, the refractive index of the outer quartz cladding layer 8 is $n_8$, and the relative refractive index difference between $n_2$ and $n_8$ is $\Delta n_2$; and

$$\Delta n_2 = [a_1*(1-x_1-x_1^2)+b_1]/100,$$

wherein

$x_1$ is a distance from any point in the first transitional cladding layer 2 to a center of the germanium-doped core layer 1, and $a_1$ and $b_1$ are both transition coefficients, with a value range of 0.15%~0.3% for $a_1$ and 0.35~0.45 for $b_1$.

As shown in Fig. 1, in the above embodiment, the refractive index of the second transitional cladding layer 3 is $n_3$, the refractive index of the outer quartz cladding layer 8 is $n_8$, and the relative refractive index difference between $n_3$ and $n_8$ is $\Delta n_3$; and

$$\Delta n_3 = [b_2 * (1 - a_2 * x_2^2)]/100,$$

wherein

$x_2$ is a distance from any point in the second transitional cladding layer 3 to a center of the germanium-doped core layer 1, and $a_2$ and $b_2$ are both transition coefficients, with a value range of 1.8%~2.2% for $a_2$ and 0.6~0.8 for $b_2$.

As shown in Fig. 1, in the above embodiment, a radius of the germanium-doped core layer 1 is 3.0~5.0 micrometers, a total thickness of the first transitional cladding layer 2 and the second transitional cladding layer 3 is 2.0~4.0 micrometers, and the radius of the outer quartz cladding layer 8 is 30~45 micrometers.

As shown in Fig. 1, when the radius of the outer quartz cladding layer 8 is 30 micrometers, the diameter range of the outer coating layer of the small-diameter single-mode optical fiber is 100.0~125.0 micrometers.

When the radius of the outer quartz cladding layer 8 is 40 micrometers, the diameter range of the outer coating layer of the small-diameter single-mode optical fiber is 135.0~200.0 micrometers.

In the above embodiment, in order to further optimize the attenuation performance of the optical fiber, the outer quartz cladding layer 8 in Fig. 1 can be doped with alkali metal elements or halogens to reduce the viscosity. For example, the alkali metal element is at least one of potassium and lithium, and the halogen is chlorine. Through reducing the viscosity of the outer quartz cladding layer 8, the viscosity matching between the germanium-doped core layer 1 and the outer quartz cladding layer 8 is achieved, the internal stress is reduced, and thus the attenuation of the optical fiber is reduced, thereby realizing an ultra-low loss small-diameter single-mode optical fiber.

In conjunction with Fig. 1, five specific embodiments are described in detail below.

Table 1 Embodiment of Waveguide Structure as Shown in Fig. 1

| Key Parameters | Embodiment 1 | Embodiment 2 | Embodiment 3 | Embodiment 4 | Embodiment 5 |
|---|---|---|---|---|---|
| $a_1$ | 0.15% | 0.20% | 0.15% | 0.20% | 0.30% |
| $b_1$ | 0.35 | 0.4 | 0.35 | 0.4 | 0.45 |
| $a_2$ | 1.80% | 2.00% | 1.80% | 2.20% | 2.00% |
| $b_2$ | 0.6 | 0.7 | 0.02 | 0.8 | 0.8 |
| Radius of Germanium-doped Core Layer 1 ($\mu$m) | 3 | 3.5 | 4 | 4.5 | 5 |
| Radius of Outer Quartz Cladding Layer 8 ($\mu$m) | 30 | 30 | 40 | 40 | 45 |
| Total Thickness of First Transitional Cladding Layer 2 and Second Transitional Cladding Layer 3 ($\mu$m) | 2 | 2.2 | 3 | 3.2 | 4 |
| Diameter of Outer Coating Layer of Optical Fiber ($\mu$m) | 100 | 125 | 135 | 165 | 200 |
| Young's Modulus of Inner Layer (MPa) | 0.1 | 0.2 | 1.2 | 1.5 | 50 |
| Young's Modulus of Outer Layer (GPa) | 0.3 | 0.5 | 0.7 | 0.8 | 1 |
| Stress Corrosion Coefficient | 21 | 22 | 25 | 26 | 28 |

The outer quartz cladding layer 8 of the embodiment 1 contains potassium, with an attenuation of 0.171dB/km at 1550nm, a splice loss of 0.18dB with conventional G.652 optical fiber, and an additional loss of 0.21dB at a 5mm bending radius.

The outer quartz cladding layer 8 of the embodiment 2 contains lithium, with an attenuation of 0.175dB/km at 1550nm, a splice loss of 0.16dB with conventional G.652 optical fiber, and an additional loss of 0.19dB at a 5mm bending radius.

The outer quartz cladding layer 8 of the embodiment 3 contains chlorine, with an attenuation of 0.157dB/km at 1550nm, a splice loss of 0.10dB with conventional G.652 optical fiber, and an additional loss of 0.35dB at a 5mm bending radius.

The outer quartz cladding layer 8 of the embodiment 4 contains potassium, with an attenuation of 0.158dB/km at 1550nm, a splice loss of 0.09dB with conventional G.652 optical fiber, and an additional loss of 0.29dB at a 5mm bending radius.

The outer quartz cladding layer 8 of the embodiment 5 is not doped with any other elements, with an attenuation of 0.179dB/km at 1550nm, a splice loss of 0.08dB with conventional G.652 optical fiber, and an additional loss of 0.46dB at a 5mm bending radius.

It can be seen that the above five embodiments realize the waveguide structure design of the small-diameter single-mode optical fiber with good compatibility with the existing conventional single-mode optical fiber, and can be well compatible with conventional G.652 optical fiber, and the butt splice loss is low.

When a certain degree of bending insensitivity is required, a fluorine-doped concave cladding layer 6 can be added around the germanium-doped core layer 1. Specifically, as shown in Fig. 2, in another preferred embodiment, the small-diameter single-mode optical fiber further comprises a fluorine-doped concave cladding layer 6 and a third transitional cladding layer 7 arranged successively from inside to outside along the radial direction, and the fluorine-doped concave cladding layer 6 and the third transitional cladding layer 7 are located between the second transitional cladding layer 3 and the outer quartz cladding layer 8; and the refractive index of the third transitional cladding layer 7 is smaller than that of the outer quartz cladding layer 8, and larger than that of the fluorine-doped concave cladding layer 6. The third transitional cladding layer 7 is provided between the fluorine-doped concave cladding layer 6 and the outer quartz cladding layer 8 to reduce the stress between the core and cladding.

As shown in Fig. 2, in the above embodiment, the refractive index of the first transitional cladding layer 2 is $n_2$, the refractive index of the outer quartz cladding layer 8 is $n_8$, and the relative refractive index difference between $n_2$ and $n_8$ is $\Delta n_2$; and

$$\Delta n_2 = [a_3 * (1 - x_1 - x_1^2 - x_1^3) + b_3]/100,$$

wherein
$x_1$ is a distance from any point in the first transitional cladding layer 2 to a center of the germanium-doped core layer 1, and $a_3$ and $b_3$ are both transition coefficients, with a value range of 0.26%~0.30% for $a_3$ and 0.54~0.58 for $b_3$.

As shown in Fig. 2, in the above embodiment, the refractive index of the second transitional cladding layer 3 is $n_3$, the refractive index of the outer quartz cladding layer 8 is $n_8$, and the relative refractive index difference between $n_3$ and $n_8$ is $\Delta n_3$; and

$$\Delta n_3 = [b_4 * (1 - a_4 * x_2^2)]/100,$$

wherein
$x_2$ is a distance from any point in the second transitional cladding layer 3 to a center of the germanium-doped core layer 1, and $a_4$ and $b_4$ are both transition coefficients, with a value range of 2.8%~3.2% for $a_4$ and 0.45~0.55 for $b_4$.

As shown in Fig. 2, the refractive index of the fluorine-doped concave cladding layer 6 is $n_6$, the refractive index of the outer quartz cladding layer 8 is $n_8$, and the relative refractive index difference between $n_6$ and $n_8$ is $\Delta n_6$; and a value range of $\Delta n_6$ is -0.12%~-0.21%.

As shown in Fig. 2, in the above embodiment, a radius of the germanium-doped core layer 1 is 3.0~4.0 micrometers, a total thickness of the first transitional cladding layer 2 and the second transitional cladding layer 3 is 2.0~4.0 micrometers, a thickness of the fluorine-doped concave cladding layer 6 is 9.0~20.0 micrometers and the radius of the outer quartz cladding layer 8 is 30~45 micrometers.

As shown in Fig. 2, when the radius of the outer quartz cladding layer 8 is 30 micrometers, the diameter range of the outer coating layer of the small-diameter single-mode optical fiber is 100.0~125.0 micrometers.

When the radius of the outer quartz cladding layer 8 is 50 micrometers, the diameter range of the outer coating layer of the small-diameter single-mode optical fiber is 135.0~200.0 micrometers.

It should be noted that, as shown in Fig. 2, in the above-mentioned embodiment, the thickness of the third transitional cladding layer 7 can be determined according to the outer diameter of the small-diameter single-mode optical fiber, the radius of the germanium-doped core layer 1, the total thickness of the first transitional cladding layer 2 and the second transitional cladding layer 3, the thickness of the fluorine-doped concave cladding layer 6, and the thickness of the outer quartz cladding layer 8. That is to say, the thickness of the third transitional cladding layer 7 can be equal to 0. At this time, in the waveguide structure diagram, the third transitional cladding layer 7 is a vertical line segment.

In the above implementation, in order to further optimize the attenuation performance of the optical fiber, the germanium-doped core layer 1 in Fig. 2 can be doped with alkali metal elements or halogens to reduce the viscosity. For example, the alkali metal element is at least one of potassium and lithium, and the halogen is chlorine.

Through reducing the viscosity of the germanium-doped core layer 1, the viscosity matching of the germanium-doped core layer 1 and the fluorine-doped concave cladding layer 6 is achieved, the internal stress is reduced, and thus the attenuation of the optical fiber is reduced, thereby realizing a low-loss, small-diameter, bend-insensitive single-mode optical fiber.

In conjunction with Fig. 2, five specific embodiments are described in detail below.

Table 2 Embodiment of Waveguide Structure as Shown in Fig. 2

| Key Parameters | Embodiment 6 | Embodiment 7 | Embodiment 8 | Embodiment 9 | Embodiment 10 |
|---|---|---|---|---|---|
| $a_3$ | 0.26% | 0.28% | 0.26% | 0.28% | 0.30% |
| $b_3$ | 0.54 | 0.56 | 0.54 | 0.56 | 0.58 |
| $a_4$ | 2.80% | 3.00% | 2.80% | 3.00% | 3.20% |
| $b_4$ | 0.45 | 0.5 | 0.45 | 0.5 | 0.55 |
| Relative Refractive Index Difference $\Delta n_6$ of Fluorine-doped Concave Cladding Layer 6 | -0.12% | -0.15% | -0.18% | -0.19% | -0.21% |
| Radius of Germanium-doped Core Layer 1 ($\mu$m) | 3 | 3 | 3.5 | 3.8 | 4 |
| Radius of Outer Quartz Cladding Layer 8 ($\mu$m) | 30 | 30 | 40 | 40 | 45 |
| Total Thickness of First Transitional Cladding Layer 2 and Second Transitional Cladding Layer 3 ($\mu$m) | 2 | 2 | 3 | 3 | 4 |
| Thickness of Fluorine-doped Concave Cladding Layer 6 ($\mu$m) | 9 | 9 | 12 | 15 | 20 |
| Diameter of Outer Coating Layer of Optical Fiber ($\mu$m) | 100 | 125 | 135 | 170 | 200 |
| Young's Modulus of Inner Layer (MPa) | 0.1 | 0.5 | 1 | 1.2 | 50 |
| Young's Modulus of Outer Layer (GPa) | 0.3 | 0.5 | 0.6 | 0.8 | 1 |
| Stress Corrosion Coefficient | 21 | 22 | 25 | 26 | 28 |

The germanium-doped core layer 1 of the embodiment 6 contains potassium, with an attenuation of 0.177 dB/km at 1550 nm, a splice loss of 0.18 dB with conventional G.652 optical fiber, and an additional loss of 0.18 dB at a 2.5 mm bending radius.

The germanium-doped core layer 1 of the embodiment 7 contains lithium, with an attenuation of 0.175 dB/km at 1550 nm, a splice loss of 0.16 dB with conventional G.652 optical fiber, and an additional loss of 0.19 dB at a 2.5 mm bending radius.

The germanium-doped core layer 1 of the embodiment 8 contains chlorine, with an attenuation of 0.175 dB/km at 1550 nm, a splice loss of 0.16 dB with conventional G.652 optical fiber, and an additional loss of 0.18 dB at a 5 mm bending radius.

The germanium-doped core layer 1 of the embodiment 9 contains potassium, with an attenuation of 0.156 dB/km at 1550 nm, a splice loss of 0.09 dB with conventional G.652 optical fiber, and an additional loss of 0.29 dB at a 5 mm bending radius.

The germanium-doped core layer 1 of the embodiment 10 is not doped with any other elements, with an attenuation of 0.179 dB/km at 1550 nm, a splice loss of 0.08 dB with conventional G.652 optical fiber, and an additional loss of 0.42 dB at a 5 mm bending radius.

It can be seen that the above five embodiments realize the waveguide structure design of the small-diameter single-mode optical fiber with good compatibility with the existing conventional single-mode optical fiber, and can be well compatible with conventional G.652 optical fiber, and the butt splice loss is low.

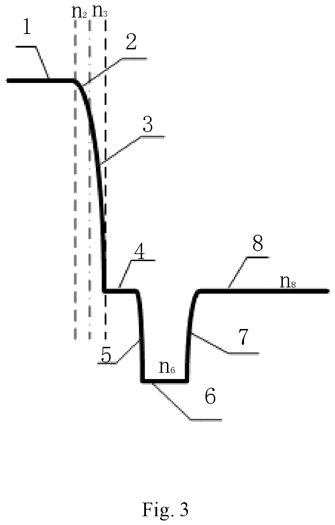

When better bending insensitivity performance is required, an inner quartz cladding layer 4 and a fourth transitional cladding layer 5 can be added. Specifically, as shown in Fig. 3, in another preferred embodiment, the inner quartz cladding layer 4 and the fourth transitional cladding layer 5 are arranged successively from inside to outside along the radial direction, and the inner quartz cladding layer 4 and the fourth transitional cladding layer 5 are located between the second transitional cladding layer 3 and the fluorine-doped concave cladding layer 6; and the refractive index of the fourth transitional cladding layer 5 is smaller than that of the inner quartz cladding layer 4, and larger than that of the fluorine-doped concave cladding layer 6.

The inner quartz cladding layer 4 is arranged between the germanium-doped core layer 1 and the fluorine-doped concave cladding layer 6 to form a stress transition, so that the fluorine-doped concave cladding layer 6 can achieve a lower relative refractive index difference and improve the bending insensitivity performance.

A double transitional cladding layer is arranged between the germanium-doped core layer 1 and the inner quartz cladding layer 4, which are a first transitional cladding layer 2 whose relative refractive index difference is decreased in a first polynomial line shape and a second transitional cladding layer 3 whose relative refractive index difference is decreased in a second polynomial line shape, to achieve smoothing of internal stress and improvement of microbending capability. A fourth transitional cladding layer 5 is arranged between the inner quartz cladding layer 4 and the fluorine-doped concave cladding layer 6, and a third transitional cladding layer 7 is arranged between the fluorine-doped concave cladding layer 6 and the outer quartz cladding layer 8. Through a series of concave cladding layers and transitional cladding layers, high bending insensitivity performance can be achieved, internal defects and stress can be optimized, and low attenuation and high reliability can be achieved.

As shown in Fig. 3, in the above embodiment, the refractive index of the first transitional cladding layer 2 is $n_2$, the refractive index of the outer quartz cladding layer 8 is $n_8$, and the relative refractive index difference between $n_2$ and $n_8$ is $\Delta n_2$; and

$$\Delta n_2 = [a_5 * (1 - x_1 - x_1^2) + b_5]/100, \text{ wherein}$$

$x_1$ is a distance from any point in the first transitional cladding layer 2 to a center of the germanium-doped core layer 1, and $a_5$ and $b_5$ are both transition coefficients, with a value range of 0.15%~0.30% for $a_5$ and 0.35~0.45 for $b_5$.

As shown in Fig. 3, in the above embodiment, the refractive index of the second transitional cladding layer 3 is $n_3$, the refractive index of the outer quartz cladding layer 8 is $n_8$, and the relative refractive index difference between $n_3$ and $n_8$ is $\Delta n_3$; and

$$\Delta n_3 = [b_6 * (1 - a_6 * x_2^2)]/100, \text{ wherein}$$

$x_2$ is a distance from any point in the second transitional cladding layer 3 to a center of the germanium-doped core layer 1, and $a_6$ and $b_6$ are both transition coefficients, with a value range of 1.8%~2.2% for $a_6$ and 0.6~0.8 for $b_6$.

As shown in Fig. 3, the refractive index of the fluorine-doped concave cladding layer 6 is $n_6$, the refractive index of the outer quartz cladding layer 8 is $n_8$, and the relative refractive index difference between $n_6$ and $n_8$ is $\Delta n_6$; and a value range of $\Delta n_6$ is -0.22%~-0.46%.

As shown in Fig. 3, in the above embodiment, a radius of the germanium-doped core layer 1 is 2.5~4.0 micrometers, a total thickness of the first transitional cladding layer 2, the second transitional cladding layer 3 and the inner quartz cladding layer 4 is 3.0~8.0 micrometers, a total thickness of the fourth transitional cladding layer 5, the fluorine-doped concave cladding layer 6 and the third transitional cladding layer 7 is 9.0~25.0 micrometers and the radius of the outer quartz cladding layer 8 is 30~62.5 micrometers.

As shown in Fig. 3, when the radius of the outer quartz cladding layer 8 is 30 micrometers, the diameter range of the outer coating layer of the small-diameter single-mode optical fiber is 100.0~125.0 micrometers.

When the radius of the outer quartz cladding layer 8 is 62.5 micrometers, the diameter range of the outer coating layer of the small-diameter single-mode optical fiber is 135.0~200.0 micrometers.

In the above implementation, in order to further optimize the attenuation performance of the optical fiber, the germanium-doped core layer 1 in Fig. 3 can be doped with alkali metal elements or halogens to reduce the viscosity. For example, the alkali metal element is at least one of potassium and lithium, and the halogen is chlorine.

Through reducing the viscosity of the germanium-doped core layer 1, the viscosity matching of the germanium-doped core layer 1 and the inner quartz cladding layer 4 is achieved, the internal stress is reduced, and thus the attenuation of the optical fiber is reduced, thereby realizing a low-loss, small-diameter, bend-insensitive single-mode optical fiber.

It should be noted that, as shown in Fig. 3, in the above-mentioned embodiment, the total thickness of the fourth transitional cladding layer 5, the fluorine-doped concave cladding layer 6 and the third transitional cladding layer 7 is usually calculated. For the individual thicknesses of the third transitional cladding layer 7 and the fourth transitional cladding layer 5, the thicknesses of both can individually be set to 0. At this time, in the waveguide structure diagram, the third transitional cladding layer 7 and the fourth transitional cladding layer 5 are each a vertical line segment.

In the above embodiment, the outer coating layer of the optical fiber comprises an inner layer and an outer layer, the Young's modulus of the inner layer is controlled within a range of 0.1 Mpa~50 Mpa, and the Young's modulus of the outer layer is controlled within a range of 0.3 Gpa~1.0 Gpa.

In conjunction with Fig. 3, five specific embodiments are described in detail below.

Table 3 Embodiment of Waveguide Structure as Shown in Fig. 3

| Key Parameters | Embodiment 11 | Embodiment 12 | Embodiment 13 | Embodiment 14 | Embodiment 15 |
|---|---|---|---|---|---|
| $a_5$ | 0.15% | 0.20% | 0.15% | 0.20% | 0.30% |
| $b_5$ | 0.35 | 0.4 | 0.35 | 0.4 | 0.45 |
| $a_6$ | 1.80% | 2.00% | 1.80% | 2.20% | 2.00% |
| $b_7$ | 0.6 | 0.7 | 0.02 | 0.8 | 0.8 |
| Relative Refractive Index Difference $\Delta n_6$ of Fluorine-doped Concave Cladding Layer 6 | -0.22% | -0.25% | -0.32% | -0.39% | -0.46% |
| Radius of Germanium-doped Core Layer 1 ($\mu$m) | 2.5 | 3 | 3.5 | 4.0 | 4.0 |
| Radius of Outer Quartz Cladding Layer 8 ($\mu$m) | 30 | 30 | 40 | 50 | 62.5 |
| Total Thickness of First Transitional Cladding Layer 2, Second Transitional Cladding Layer 3 and Inner Quartz Cladding Layer 4($\mu$m) | 3 | 4 | 4 | 6 | 8 |
| Total Thickness of Fourth Transitional Cladding Layer 5, Fluorine-doped Concave Cladding Layer 6 and Third Transitional Cladding Layer 7 ($\mu$m) | 9 | 12 | 15 | 18 | 20 |
| Diameter of Outer Coating Layer of Optical Fiber ($\mu$m) | 100 | 125 | 135 | 195 | 200 |
| Young's Modulus of Inner Layer (MPa) | 0.1 | 0.2 | 1.5 | 50 | 0.9 |
| Young's Modulus of Outer Layer (GPa) | 0.3 | 0.5 | 0.8 | 1.0 | 0.7 |
| Stress Corrosion Coefficient | 23 | 22 | 26 | 27 | 27 |

The germanium-doped core layer 1 of the embodiment 11 is not doped with any other elements, with an attenuation of 0.179 dB/km at 1550 nm and an additional loss of 0.12 dB at a 2.5 mm bending radius.

The germanium-doped core layer 1 of the embodiment 12 contains lithium, with an attenuation of 0.179 dB/km at 1550 nm and an additional loss of 0.13 dB at a 2.5 mm bending radius.

The germanium-doped core layer 1 of the embodiment 13 contains chlorine, with an attenuation of 0.175 dB/km at 1550 nm and an additional loss of 0.11 dB at a 2.5 mm bending radius.

The germanium-doped core layer 1 of the embodiment 14 contains lithium, with an attenuation of 0.176 dB/km at 1550 nm and an additional loss of 0.12 dB at a 5 mm bending radius.

The germanium-doped core layer 1 of the embodiment 15 contains potassium, with an attenuation of 0.159 dB/km at 1550 nm, a splice loss of 0.08 dB with conventional G.652 optical fiber, and an additional loss of 0.22 dB at a 5 mm bending radius.

It can be seen that the above five embodiments realize the waveguide structure design of the small-diameter single-mode optical fiber with good compatibility with the existing conventional single-mode optical fiber, and can be well compatible with conventional G.652 optical fiber, and the butt splice loss is low.

In the description of the present application, it should be noted that the orientation or positional relationship indicated by the terms "upper", "lower", etc. are based on the orientation or positional relationship shown in the drawings, which is only for the convenience of describing the present application and simplifying the description, instead of indicating or implying that the pointed device or element must have a specific orientation, be configured and operated in a specific orientation, therefore it may not be understood as a limitation of the present application. Unless otherwise clearly specified and limited, the terms "installation", "connected" and "connection" should be understood in a broad sense. For example, it can be a fixed connection, a detachable connection, or an integral connection; further can be a mechanical connection, or an electrical connection; further can be directly connected, or indirectly connected through an intermediate medium, or can be the internal communication between two components. For those of ordinary skill in the art, the specific meanings of the above-mentioned terms in the present application may be understood according to specific circumstances.

It should be noted that relational terms such as "first" and "second" are only for distinguishing one entity or operation from another entity or operation in the present application, and do not necessarily require or imply any such actual relationship or order between these entities or operations. Moreover, the terms "include", "comprise" or any other variants thereof are intended to cover non-exclusive inclusion, so that a process, method, article or device comprising a series of elements not only comprises those elements, but also comprises those that are not explicitly listed, or further comprises elements inherent to the process, method, article, or device. If there are no more restrictions, the elements defined by the sentence "comprising a..." does not exclude the existence of other same elements in the process, method, article, or device comprising the elements.

The above-mentioned are only the embodiments of the present application, so that those skilled in the art may understand or implement the present application. For those skilled in the art, various modifications to these embodiments will be obvious, and the general principles defined herein may be implemented in other embodiments without departing from the spirit or scope of the present application. Therefore, the present application will not be limited to the embodiments shown in this document, but will be subject to the widest scope consistent with the principles and novel features applied herein.

### Claims

1. A small-diameter single-mode optical fiber, comprising a germanium-doped core layer (1), a first transitional cladding layer (2), a second transitional cladding layer (3) and an outer quartz cladding layer (8), which are arranged successively from inside to outside along a radial direction, wherein

    a refractive index of the first transitional cladding layer (2) is less than that of the germanium-doped core layer (1), and is greater than that of the second transitional cladding layer (3); and
    from inside to outside along the radial direction, a relative refractive index difference of the first transitional cladding layer (2) is decreased in a first polynomial line shape, and the relative refractive index difference of the second transitional cladding layer (3) is decreased in a second polynomial line shape.

2. The small-diameter single-mode optical fiber according to claim 1, wherein

    the refractive index of the first transitional cladding layer (2) is $n_2$, the refractive index of the outer quartz cladding layer (8) is $n_8$, and the relative refractive index difference between $n_2$ and $n_8$ is $\Delta n_2$; and

$$\Delta n_2 = [a_1(1-x_1-x_1^2)+b_1]/100,$$

    wherein
    $x_1$ is a distance from any point in the first transitional cladding layer (2) to a center of the germanium-doped core layer (1), and $a_1$ and $b_1$ are both transition coefficients, with a value range of 0.15%~0.3% for $a_1$ and 0.35~0.45 for $b_1$.

3. The small-diameter single-mode optical fiber according to claim 1, wherein

    the refractive index of the second transitional cladding layer (3) is $n_3$, the refractive index of the outer quartz cladding layer (8) is $n_8$, and the relative refractive index difference between $n_3$ and $n_8$ is $\Delta n_3$; and

$$\Delta n_3 = [b_2*(1-a_2*x_2^2)]/100,$$

    wherein
    $x_2$ is a distance from any point in the second transitional cladding layer (3) to a center of the germanium-doped core layer (1), and $a_2$ and $b_2$ are both transition coefficients, with a value range of 1.8%~2.2% for $a_2$ and 0.6~0.8 for $b_2$.

4. The small-diameter single-mode optical fiber according to claim 1, wherein
a radius of the germanium-doped core layer (1) is 3.0~5.0 micrometers, a total thickness of the first transitional cladding layer (2) and the second transitional cladding layer (3) is 2.0~4.0 micrometers, and the radius of the outer quartz cladding layer (8) is 30~45 micrometers.

5. The small-diameter single-mode optical fiber according to claim 1, wherein

the small-diameter single-mode optical fiber further comprises a fluorine-doped concave cladding layer (6) and a third transitional cladding layer (7) which are arranged successively from inside to outside along the radial direction, and the fluorine-doped concave cladding layer (6) and the third transitional cladding layer (7) are located between the second transitional cladding layer (3) and the outer quartz cladding layer (8); and
the refractive index of the third transitional cladding layer (7) is smaller than that of the outer quartz cladding layer (8), and larger than that of the fluorine-doped concave cladding layer (6).

6. The small-diameter single-mode optical fiber according to claim 5, wherein

the refractive index of the first transitional cladding layer (2) is $n_2$, the refractive index of the outer quartz cladding layer (8) is $n_8$, and the relative refractive index difference between $n_2$ and $n_8$ is $\Delta n_2$; and

$$\Delta n_2 = [a_3 * (1 - x_1 - x_1^2 - x_1^3) + b_3]/100,$$

wherein
$x_1$ is a distance from any point in the first transitional cladding layer (2) to a center of the germanium-doped core layer (1), and $a_3$ and $b_3$ are both transition coefficients, with a value range of 0.26%~0.30% for $a_3$ and 0.54~0.58 for $b_3$.

7. The small-diameter single-mode optical fiber according to claim 5, wherein

the refractive index of the second transitional cladding layer (3) is $n_3$, the refractive index of the outer quartz cladding layer (8) is $n_8$, and the relative refractive index difference between $n_3$ and $n_8$ is $\Delta n_3$; and

$$\Delta n_3 = [b_4 * (1 - a_4 * x_2^2)]/100,$$

wherein
$x_2$ is a distance from any point in the second transitional cladding layer (3) to a center of the germanium-doped core layer (1), and $a_4$ and $b_4$ are both transition coefficients, with a value range of 2.8%~3.2% for $a_4$ and 0.45~0.55 for $b_4$.

8. The small-diameter single-mode optical fiber according to claim 5, wherein

the refractive index of the fluorine-doped concave cladding layer (6) is $n_6$, the refractive index of the outer quartz cladding layer (8) is $n_8$, and the relative refractive index difference between $n_6$ and $n_8$ is $\Delta n_6$; and
a value range of $\Delta n_6$ is -0.12%~-0.21%.

9. The small-diameter single-mode optical fiber according to claim 5, wherein
a radius of the germanium-doped core layer (1) is 3.0~4.0 micrometers, a total thickness of the first transitional cladding layer (2) and the second transitional cladding layer (3) is 2.0~4.0 micrometers, a thickness of the fluorine-doped concave cladding layer (6) is 9.0~ 20.0 micrometers and the radius of the outer quartz cladding layer (8) is 30~45 micrometers.

10. The small-diameter single-mode optical fiber according to claim 5, wherein

the small-diameter single-mode optical fiber further comprises an inner quartz cladding layer (4) and a fourth transitional cladding layer (5) which are arranged successively from inside to outside along the radial direction, and the inner quartz cladding layer (4) and the fourth transitional cladding layer (5) are located between the second transitional cladding layer (3) and the fluorine-doped concave cladding layer (6); and

the refractive index of the fourth transitional cladding layer (5) is smaller than that of the inner quartz cladding layer (4), and larger than that of the fluorine-doped concave cladding layer (6).

11. The small-diameter single-mode optical fiber according to claim 10, wherein

the refractive index of the first transitional cladding layer (2) is $n_2$, the refractive index of the outer quartz cladding layer (8) is $n_8$, and the relative refractive index difference between $n_2$ and $n_8$ is $\Delta n_2$; and

$$\Delta n_2 = [a_5 * (1 - x_1 - x_1^2) + b_5]/100,$$

wherein
$x_1$ is a distance from any point in the first transitional cladding layer (2) to a center of the germanium-doped core layer (1), and $a_5$ and $b_5$ are both transition coefficients, with a value range of 0.15%~0.30% for $a_5$ and 0.35~0.45 for $b_5$.

12. The small-diameter single-mode optical fiber according to claim 10, wherein

the refractive index of the second transitional cladding layer (3) is $n_3$, the refractive index of the outer quartz cladding layer (8) is $n_8$, and the relative refractive index difference between $n_3$ and $n_8$ is $\Delta n_3$; and

$$\Delta n_3 = [b_6 * (1 - a_6 * x_2^2)]/100,$$

wherein
$x_2$ is a distance from any point in the second transitional cladding layer (3) to a center of the germanium-doped core layer (1), and $a_6$ and $b_6$ are both transition coefficients, with a value range of 1.8%~2.2% for $a_6$ and 0.6~0.8 for $b_6$.

13. The small-diameter single-mode optical fiber according to claim 10, wherein

the refractive index of the fluorine-doped concave cladding layer (6) is $n_6$, the refractive index of the outer quartz cladding layer (8) is $n_8$, and the relative refractive index difference between $n_6$ and $n_8$ is $\Delta n_6$; and
a value range of $\Delta n_6$ is -0.22%~-0.46%.

14. The small-diameter single-mode optical fiber according to claim 10, wherein
a radius of the germanium-doped core layer (1) is 2.5~4.0 micrometers, a total thickness of the first transitional cladding layer (2), the second transitional cladding layer (3) and the inner quartz cladding layer (4) is 3.0~8.0 micrometers, a total thickness of the fourth transitional cladding layer (5), the fluorine-doped concave cladding layer (6) and the third transitional cladding layer (7) is 9.0~25.0 micrometers and the radius of the outer quartz cladding layer (8) is 30~62.5 micrometers.

15. The small-diameter single-mode optical fiber according to claim 1, wherein
the outer quartz cladding layer (8) is doped with alkali metal elements or halogens to reduce the viscosity.

16. The small-diameter single-mode optical fiber according to claim 5 or claim 10, wherein
the germanium-doped core layer (1) is doped with alkali metal elements or halogens to reduce the viscosity.

17. The small-diameter single-mode optical fiber according to claim 1 or claim 16, wherein
the alkali metal element is at least one of potassium and lithium, and the halogen is chlorine.

Fig. 1

Fig. 2

Fig. 3

## INTERNATIONAL SEARCH REPORT

| International application No. |
|---|
| **PCT/CN2022/127613** |

### A. CLASSIFICATION OF SUBJECT MATTER

G02B6/02(2006.01)i;G02B6/028(2006.01)i;G02B6/036(2006.01)i

According to International Patent Classification (IPC) or to both national classification and IPC

### B. FIELDS SEARCHED

Minimum documentation searched (classification system followed by classification symbols)

IPC：G02B6

Documentation searched other than minimum documentation to the extent that such documents are included in the fields searched

Electronic data base consulted during the international search (name of data base and, where practicable, search terms used)

CNABS, CNTXT, ENTXTC, VEN, WPABSC: 光纤, 细径, 小径, 尺寸, 包层, 折射率, 曲线, 函数, 多项式, 不同, 两个, 第二, 多个, 过渡, 缓冲, 减小, 渐变, 降低, 平滑, 平缓, 下降, 递减, 应力, fiber?, fibre?, clad+, index, refractive, stress+, curve?, polynomial??, function?, differen+, two, minish+, fall+, reduc+, lessen+, grad+

### C. DOCUMENTS CONSIDERED TO BE RELEVANT

| Category* | Citation of document, with indication, where appropriate, of the relevant passages | Relevant to claim No. |
|---|---|---|
| PX | CN 114966959 A (FIBERHOME TELECOMMUNICATION TECHNOLOGIES CO., LTD. et al.) 30 August 2022 (2022-08-30) <br> claims 1-17, description, paragraphs [0004]-[0042], and figures 1-3 | 1-17 |
| Y | US 2019331848 A1 (CORNING INC.) 31 October 2019 (2019-10-31) <br> description, paragraphs [0059] and [0075]-[0077], and figure 4 | 1-17 |
| Y | CN 111308609 A (ZHONGTIAN TECHNOLOGY PREC MATERIALS CO., LTD.) 19 June 2020 (2020-06-19) <br> description, paragraphs [0004]-[0040], and figure 1 | 1-17 |
| Y | CN 103869410 A (FIBERHOME TELECOMMUNICATION TECHNOLOGIES CO., LTD.) 18 June 2014 (2014-06-18) <br> description, paragraphs [0007]-[0044], and figures 1-2 | 2-3, 5-14, 16 |
| A | CN 112305665 A (STERLITE TECHNOLOGIES LTD.) 02 February 2021 (2021-02-02) <br> entire document | 1-17 |

☑ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 February 2023** | **20 February 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.

**PCT/CN2022/127613**

### C. DOCUMENTS CONSIDERED TO BE RELEVANT

| Category* | Citation of document, with indication, where appropriate, of the relevant passages | Relevant to claim No. |
|---|---|---|
| A | CN 103472529 A (FIBERHOME TELECOMMUNICATION TECHNOLOGIES CO., LTD. et al.) 25 December 2013 (2013-12-25)<br>entire document | 1-17 |
| A | CN 113552666 A (SHIN-ETSU CHEMICAL CO., LTD.) 26 October 2021 (2021-10-26)<br>entire document | 1-17 |
| A | EP 2749917 A2 (SHIN-ETSU CHEMICAL CO., LTD.) 02 July 2014 (2014-07-02)<br>entire document | 1-17 |
| A | US 2021405286 A1 (CORNING INC.) 30 December 2021 (2021-12-30)<br>entire document | 1-17 |

Form PCT/ISA/210 (second sheet) (July 2022)

**INTERNATIONAL SEARCH REPORT**
Information on patent family members

International application No.

**PCT/CN2022/127613**

| Patent document cited in search report | | | Publication date (day/month/year) | Patent family member(s) | | | Publication date (day/month/year) |
|---|---|---|---|---|---|---|---|
| CN | 114966959 | A | 30 August 2022 | None | | | |
| US | 2019331848 | A1 | 31 October 2019 | WO | 2019212801 | A1 | 07 November 2019 |
| | | | | US | 11181686 | B2 | 23 November 2021 |
| CN | 111308609 | A | 19 June 2020 | CN | 111308609 | B | 14 December 2021 |
| CN | 103869410 | A | 18 June 2014 | ES | 2718879 | T3 | 05 July 2019 |
| | | | | EP | 3098631 | A1 | 30 November 2016 |
| | | | | EP | 3098631 | A4 | 30 August 2017 |
| | | | | EP | 3098631 | B1 | 06 March 2019 |
| | | | | CA | 2928115 | A1 | 30 July 2015 |
| | | | | CA | 2928115 | C | 16 January 2018 |
| | | | | KR | 20160113601 | A | 30 September 2016 |
| | | | | KR | 101835249 | B1 | 06 March 2018 |
| | | | | WO | 2015109861 | A1 | 30 July 2015 |
| | | | | CN | 103869410 | B | 30 December 2015 |
| | | | | IN | 201647019133 | A | 31 August 2016 |
| CN | 112305665 | A | 02 February 2021 | EP | 3771932 | A1 | 03 February 2021 |
| | | | | US | 2021033782 | A1 | 04 February 2021 |
| | | | | IN | 201921031253 | A | 05 February 2021 |
| | | | | US | 11327222 | B2 | 10 May 2022 |
| CN | 103472529 | A | 25 December 2013 | CN | 103472529 | B | 10 June 2015 |
| CN | 113552666 | A | 26 October 2021 | US | 2021333471 | A1 | 28 October 2021 |
| | | | | US | 11378738 | B2 | 05 July 2022 |
| | | | | EP | 3901675 | A1 | 27 October 2021 |
| | | | | EP | 3901675 | A4 | 27 October 2021 |
| | | | | KR | 20210131232 | A | 02 November 2021 |
| | | | | JP | 2021176008 | A | 04 November 2021 |
| | | | | IN | 202114018229 | A | 07 December 2021 |
| EP | 2749917 | A2 | 02 July 2014 | KR | 20140086831 | A | 08 July 2014 |
| | | | | KR | 102126089 | B1 | 23 June 2020 |
| | | | | EP | 2749917 | A3 | 18 January 2017 |
| | | | | US | 2015331180 | A1 | 19 November 2015 |
| | | | | JP | 2014142613 | A | 07 August 2014 |
| | | | | JP | 6124778 | B2 | 10 May 2017 |
| | | | | CN | 103913800 | A | 09 July 2014 |
| | | | | CN | 103913800 | B | 14 September 2018 |
| | | | | IN | 201305970 | I4 | 16 January 2015 |
| US | 2021405286 | A1 | 30 December 2021 | WO | 2021262481 | A1 | 30 December 2021 |

Form PCT/ISA/210 (patent family annex) (July 2022)